# EUROPEAN PATENT SPECIFICATION

(11) **EP 0 554 125 B1**
(45) Date of publication and mention of the grant of the patent: **23.07.1997**
(21) Application number: 93300701.5
(22) Date of filing: 29.01.1993
(51) Int. Cl.: G05B 19/19, G11B 5/55, G11B 7/08, B41J 2/30, G11B 21/08

(54) **Positioning control system**
Positionierungssteuerungssystem
Système de commande de positionnement

(30) Priority: 31.01.1992 JP 16774/92
(43) Date of publication of application: 04.08.1993
(73) Proprietor: FUJITSU LIMITED, Kawasaki-shi, Kanagawa 211 (JP)
(72) Inventor: Okamura, Eiji, c/o Fujitsu Limited, Kawasaki-shi, Kanagawa 211 (JP)
(74) Representative: Godsill, John Kenneth

(56) References cited:
- US-A- 4 980 625
- PROCEEDINGS OF THE SIXTEENTH SOUTHEASTERN SYMPOSIUM ON SYSTEM THEORY, 25-27 MARCH 1984, SILVER SPRING, MD, USA pages 165 - 168 I.D. MITCHELL JR. 'A SIMULATION OF A DIGITAL ADAPTIVE NOTCH FILTER'

## Description

The present invention relates to a positioning control system for positioning at least one magnetic head or other controlled device at a designated position.

Recently, there has been a tendency to demand, in a computer system, transfer of large amounts of data at high speed. This requires an auxiliary storage device, such as a magnetic disk drive or optical disk drive, which can transfer large amounts of data at high speed to exchange data with a host device.

To meet this requirement, a controlled device comprising a magnetic head, an optical head, a print head, or the like, should ideally be moved to a designated position at high speed and with high accuracy. Since the controlled device is driven at a high velocity and high acceleration during execution of such a head positioning (head seek) operation, mechanical resonance phenomena, which can cause the controlled device to vibrate even after the head positioning is completed, are likely to occur. Thus, there is a desire to provide more stable control by suppressing the mechanical resonance characteristics of the vibration of such controlled devices.

In general, in a magnetic disk drive or the like, data transfer speed is limited by a rotation speed of a motor which rotates a magnetic disk or the like as a recording medium. Accordingly, in order to attain a substantially higher data transfer speed without increasing rotation speed, it is possible to increase the number of recording media (such as magnetic disks), that are contained in a magnetic disk drive or the like, and to increase the density of the recording surface (e.g., a track pitch thereof being less than 10 µm) of such disks, thereby increasing data recording density and data storage capacity. It is then desirable to provide a plurality of controlled devices such as magnetic heads, the number thereof corresponding to the number of recording media, so that data can be written to and read from the magnetic disks in parallel by moving the plurality of magnetic heads simultaneously, and at high speed, using one actuator.

A number of magnetic heads are mounted on one actuator via a plurality of head arms, which can give rise to a plurality of mechanical resonance frequencies being generated. Furthermore, since the magnetic heads must ideally be moved at high speed, it is desirable for the respective head arms to be as light in weight as possible. Therefore, various mechanical resonance modes are likely to occur, which results in increased difficulty of control of those mechanical resonance characteristics.

In order to facilitate an understanding of mechanical resonances of controlled devices, the construction of a magnetic disk drive which includes magnetic heads will be described as an example, with reference to the accompanying drawings:

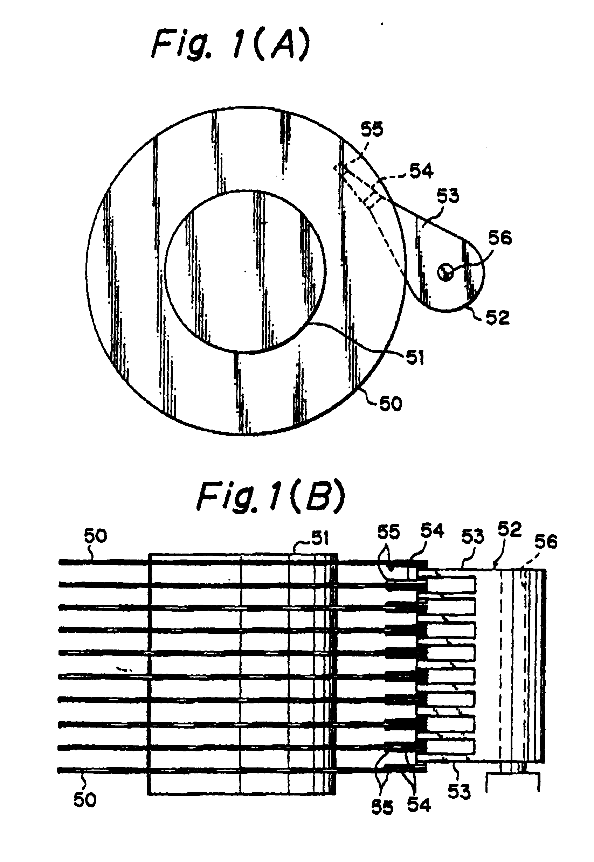

Figs. 1(A) and 1(B) of the accompanying drawings are diagrams showing a magnetic disk drive. To be more specific, Fig. 1(A) is a schematic plan view of the magnetic disk drive, and Fig. 1(B) is a schematic side view thereof. The reference numeral 50 denotes a plurality of magnetic disks, 51 a rotatable shaft, 52 an actuator, 53 arms, 54 gimbals, 55 core sliders including magnetic heads, and 56 a rotatable shaft. The rotatable shaft 51 having the magnetic disks 50 fixed thereon is rotated by a motor (not shown). In the illustrated example, ten magnetic disks 50 are fixed on the rotatable shaft 51. However, it may be also possible to fix one or two magnetic disks 50 on the rotatable shaft 51 according to the required storage capacity and data transfer speed.

In this example, the core slider 55 is supported on each arm 53 through two gimbals 54. The core sliders 55 move radially across the magnetic disks 50 by rotating the arms 53 about the rotatable shaft 56 of the actuator 52, and thereby each of the magnetic heads is positioned at the designated position (track). Through the magnetic heads, data can be written on the magnetic disks 50 or data stored on the magnetic disks 50 can be read therefrom.

As the recording density (track density) of the magnetic disks 50 increases, it is necessary to drive the actuator 52 at high speed, and to move and position the respective magnetic heads to desired tracks at high speed and with high accuracy. In this case, the arms 53, including the core sliders 55, are driven at a high velocity and high acceleration by the actuator 52, and accordingly mechanical resonance, which causes vibration of the magnetic heads, becomes a problem. Thus, it is desirable to suppress the mechanical resonance characteristic or to transfer the resonance frequency to a higher frequency band so as to eliminate the influence on a control frequency band of the magnetic heads.

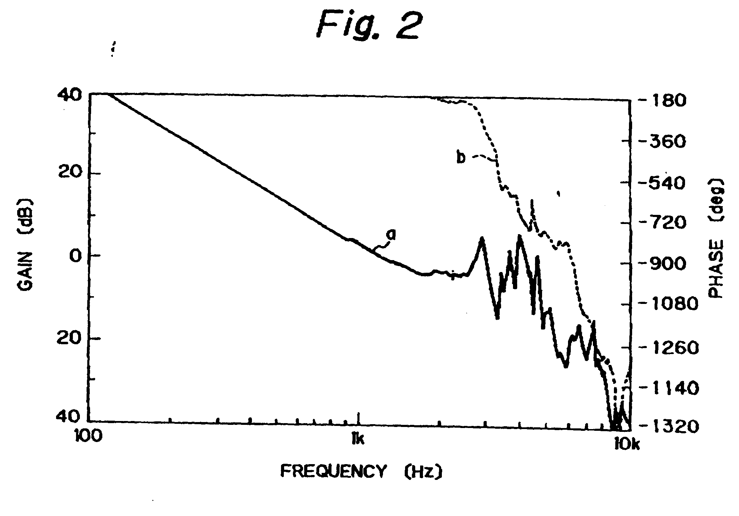

Fig. 2 is a graph showing exemplary transfer characteristics (x/i characteristics; a response x in a head position relative to a current i supplied to a voice coil motor constituting the actuator) of the actuator. In Fig. 2, the response x is typically represented by a frequency response of a gain and phase of a head positioning control system. To be more specific, a horizontal axis represents frequency (Hz), the left vertical axis represents gain (dB), and the right vertical axis represents phase (deg). The curve (a) represents the gain characteristics, while the curve (b) represents the phase characteristics. As is apparent from these transfer characteristics, there are several mechanical resonance frequencies, where the gain increases substantially, which resonance frequencies result from the structure of the actuator, the magnetic heads, etc. The typical resonances include a main resonance and a torsional resonance of the whole actuator, a vertical resonance and a torsional resonance of the fork-shaped arms having a number of heads mounted thereon, a resonance of spring arms between the heads and the actuator, and a resonance of the voice coil motor.

The aforementioned resonance characteristics are not equal for all storage devices, in terms of resonance frequency and resonance strength. Further, even in a specific device, the resonance characteristics vary according to the temperature change, aging, and rotational position of each of the arms (head positions). In the case of controlling this type of device, a transfer function F(S) of the actuator and a transfer function Freso(s) representing the mechanical resonance characteristics can be expressed as follows:$\text{F(s) =} \frac{\text{Km}}{{\text{s}}^{\text{2}}} \text{× Freso(s)}$ 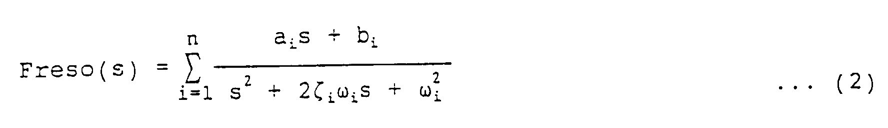 $\text{Km =} \frac{{\text{K}}_{\text{T}} {\text{R}}_{\text{H}}}{\text{J}} {\text{[m/(A - S}}^{\text{2}} \text{)]}$

If this actuator is modeled on the assumption that it is a rigid body, it can be assumed that Freso(s) = 1. In equation (3), J (Kg.m²) is a moment of inertia of the rotary type actuator, K_{T} (N - m/A) is a torque constant of the voice coil motor and R_{H} (m) is the distance between the centre of rotation and the head.

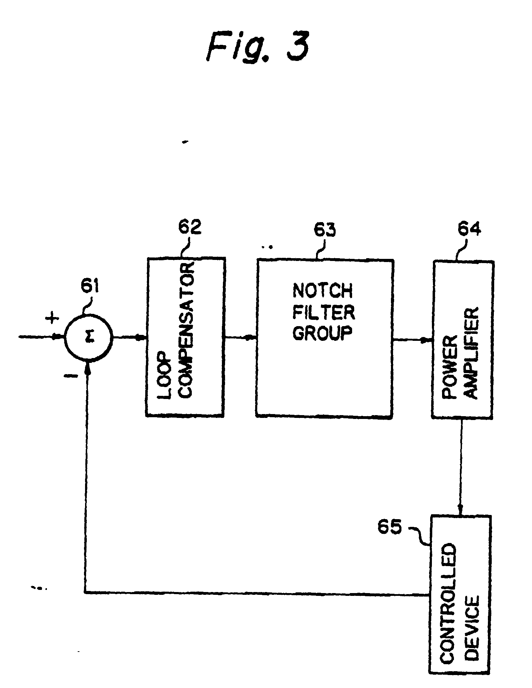

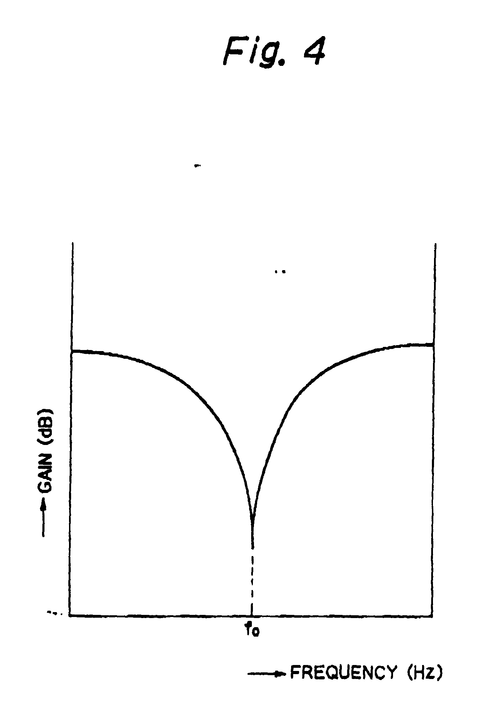

A previously-considered control system for an actuator having the above resonance characteristics is shown in Fig. 3. In this figure, the reference numeral 61 denotes an adder (also represented by Σ), 62 a loop compensator, 63 a notch filter group that will be described in relation to Figs. 4 and 5, 64 a power amplifier, and 65 a controlled device (plant) which includes the actuator and the magnetic head. The actual position information of the controlled device 65 is controlled through the loop compensator 62, the notch filter group 63, and the power amplifier 64, so that the difference between the actual position information and the desired position information becomes a specified value, for example zero.

The loop compensator 62 in this control system includes a combination of a lead-lag filter for adjusting a phase angle of the system to stabilize the loop and a secondary filter for reducing noise in a high frequency band. The transfer function Gc(s) of the loop compensator, representing a ratio of output signal to input signal, is expressed in equation (4).$\text{Gc(s) = Gco} \frac{{\text{s + ω}}_{\text{Ld}}}{{\text{s + ω}}_{\text{Lg}}} \frac{\text{1}}{{\text{s}}^{\text{2}} {\text{+ 2ζ}}_{\text{c}} {\text{ω}}_{\text{c}} {\text{s + ω}}_{\text{c}}^{\text{2}}}$ where Gco is a direct current gain, ω_{Ld} is a lead compensating angular frequency (an angular frequency corresponds to a phase angle), ω_{Lg} is a lag compensating angular frequency, ζ_{c} and ω_{c} are a damping ratio and a cut-off angular frequency of the secondary filter, respectively.

Generally, the loop compensator has an integrator {transfer function = [(s + ωᵢ)/s]} connected in series so as to eliminate a steady position error. However, in this example, the integrator is not illustrated for the sake of simplification. In the case where the controlled device 65 has no or negligible mechanical resonance characteristics, the control can be executed stably by providing the loop compensator 62 as shown in Fig. 3.

Further, it is also possible to control the device 65 by means of a state feedback regulator using the loop compensator 62 as an observer. A state equation and an output equation in this case are as expressed in the following equations (5) and (6) respectively. Based on these equations (5) and (6), an observer equation (equation (7)) can be obtained. 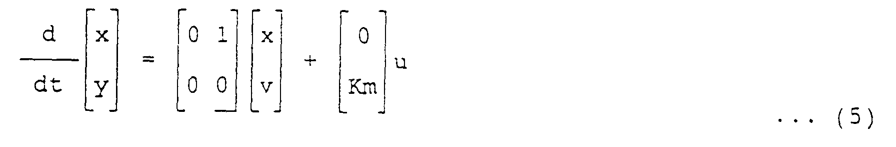 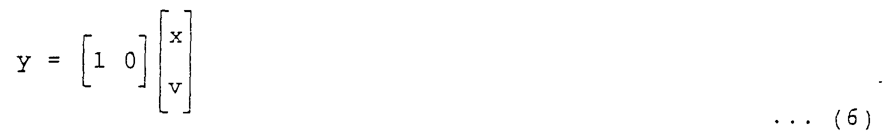 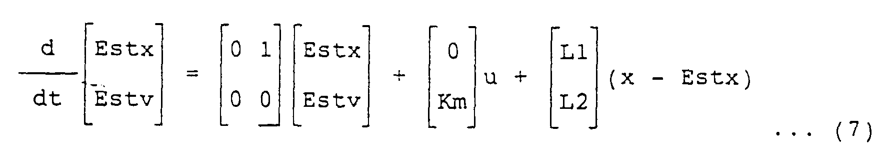 ${\text{u = k}}_{\text{1}} {\text{× Estx - k}}_{\text{2}} \text{× Estv}$

If L1, L2 in the equation (7) are selected with reference to a related reference (G F Franklin, J D Powell and M L Workman "Digital Control of Dynamic Systems", Second Edition, Addison - Wesley, 1990), Estx and Estv are selected so that they become estimated values of the position x and the speed v, respectively. Accordingly, the controlled device can be controlled by selecting the gains k₁, k₂ in accordance with a controller equation expressed by the equation (8) using the state feedback.

However, in the case where the mechanical resonance characteristics are not negligible, a number m of notch filters may be connected in series with the loop compensator 62 in order to cancel resonance peaks caused by the mechanical resonance characteristics. The transfer function of such a group of notch filters is shown in equation (9). In other words, the notch filter group 63 constituted by the plurality of notch filters is provided. 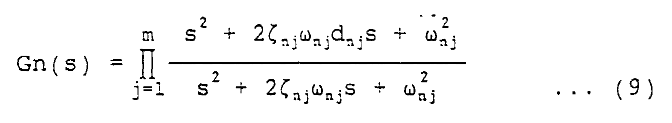 where ζₙⱼ denotes a damping ratio of the notch filters, ωₙⱼ denotes a notch centre angular frequency in the centre of each notch portion, and dₙⱼ denotes the depth of each notch portion. Here, it is assumed that dₙⱼ < 1.

Further, to enable the function of the notch filter group in Fig. 3 to be understood more clearly, exemplary transfer characteristics of a single notch filter and notch filter group are illustrated in Fig. 4 and Fig. 5, respectively.

As apparent from Fig. 4, frequency characteristics of the gain of the notch filter have a notch-shaped form, where the gain corresponding to an extremely narrow frequency range in the closest vicinity of a notch centre frequency f₀ is remarkably low. Through the notch filter, the input signal having the frequency f₀ is eliminated and therefore substantially not transferred.

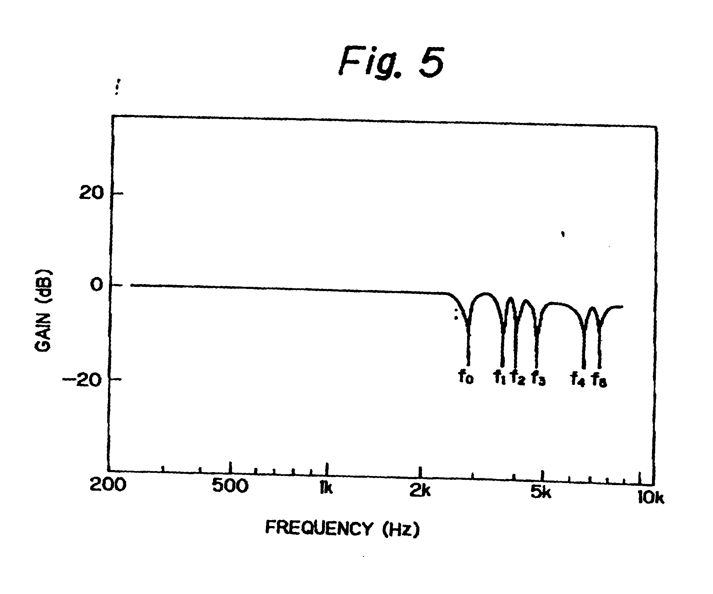

By virtue of such characteristics of the notch filter, the mechanical resonance energy generated in the resonance frequency f₀ can be eliminated. Accordingly, if a plurality of notch filters are designed in conformity with the respectively corresponding resonance frequencies shown in Figs. 2 and 5 (in Fig. 5, six resonance frequencies f₀ ∼ f₅ are illustrated representatively), and if the notch filter group is constituted by connecting these notch filters in cascade, many mechanical resonances can be eliminated simultaneously.

In such a construction, the notch filters are each constructed so that the notch centre angular frequency ωₙⱼ coincides with the respective mechanical frequencies in the mechanical resonance characteristics. However, as the resonance characteristics differ depending upon the storage device in use it is necessary to design a notch filter group according to the resonance frequency and the resonance strength of each storage device. Further, even in a specific device, due to the temperature change and the aging, the resonance frequency may shift from the notch centre frequency, thereby resulting in the disadvantage that the resonance characteristics cannot be suppressed effectively. A large number of mechanical resonance points of the controlled device 65 results in a large construction of the notch filter group 63 since notch filters corresponding to the respective resonance points (frequencies) must ideally be included. When the notch filters are constituted by analog circuits, the number of parts is increased thereby making the notch filter group larger in size and more costly. On the other hand, when the notch filters are constituted by digital circuits, a disadvantage occurs in that provision of an expensive high speed operating DSP (digital signal processor) is necessitated, in order to process various signals at high speed so that a filter calculation time does not become longer.

In alternative control systems, such as those described in US4980625 and in the proceedings of "the sixteenth Southeastern symposium on system theory" 1984, adaptive notch filters are used. Such adaptive notch filters are complicated and expensive to produce, since the centre frequency of the notch filter needs to be calculated and updated while the controlled device is moving. This calculation takes time and complex algorithms to complete.

Especially with regard to magnetic disk drives, there is a recent requirement for transferring large amounts of data at high speed as described above.

To address this requirement, the track density of each magnetic disk is designed to be as high as possible, and the number of magnetic disks contained in one magnetic disk drive is intended to be as large as possible. Further, as the number of magnetic disks increases, the number of the corresponding magnetic heads and head arms is likely to increase. Therefore, a larger number of head and head arms are fixed to one actuator, which leads to complexity of the structure of actuator. Further, since the actuator, the arms, etc., must be moved at high speed to ensure the data transfer at high speed, they are required to be fabricated, utilizing a light metal such as aluminum. Accordingly, the mechanical resonance modes and the resonance frequencies are likely to increase. Due to various resonance energies caused by such resonance modes, residual vibrations of the magnetic heads after a seek operation is completed are likely to occur over a wider frequency range.

Consequently, it becomes difficult for all these resonant energies to be cancelled by only the notch filter group, in the magnetic disk drive.

According to the present invention there is provided a positioning control system including a movable device and means for controlling the position of the device in dependence upon an applied position-designating signal, the said device having a plurality of mechanical resonance frequencies, which system comprises position detecting means for producing an actual position signal dependent upon the actual position of the said device, arithmetic control means, including electronic low-pass filter means operable to suppress effects of mechanical resonances of the device, for generating a drive signal based on the said actual position signal and on the applied position-designating signal, and drive means for moving the said device in dependence upon the said drive signal, characterised in that the said filter means comprise a notch filter having a gain-frequency characteristic which provides an abrupt low-pass cut-off slope and has its notch centre frequency at the lowest mechanical resonance frequency of the device, and an elliptical filter having a gain-frequency characteristic which has a minimum-type discontinuity at the second lowest mechanical resonance frequency of the device.

It will be appreciated that when the controlled device only has two mechanical resonance frequencies, the notch centre frequency will be at the lower mechanical resonance frequency and the said discontinuity will be at the higher mechanical resonance frequency.

In such a positioning control system a digital signal processor may provide the said notch and elliptical filters.

The said device may include an operating head for cooperating with a data storage disk having a plurality of data tracks, the system including switching means for rendering the said filter means ineffective when the said operating head is moved from one of such tracks to another, in a seek operation, and for rendering the said filter means effective during settling and track-following operations subsequent to such a seek operation.

Such a positioning control system may be operable to maintain the said drive signal at an initial value while the said filter means are ineffective.

In addition, such an operating head may be a magnetic head, for cooperating with a magnetic data storage disk. The said magnetic data storage disk may be rotated by a spindle motor.

Alternatively, the said operating head may be an optical head, for cooperating with an optical data storage disk.

In another alternative, the said device may comprise a print head which is movable over a printing sheet.

In a positioning control system which controls a read/write head or print head the said arithmetic control means may include a digital signal processor operable to calculate a distance between the actual position of the said device and the desired position of the device, so that the said device can be controlled to move over the calculated distance when the system is in use.

The said drive means may include an amplifier for amplifying the said drive signal.

In embodiments of the present invention, the resonance characteristics, which result in the vibration of the controlled device, may be suppressed stably by a relatively simple low pass filter construction utilizing the combination of a notch filter and an elliptical function filter.

For a better understanding of the invention and to show how the same may be carried into effect, reference will now be made, by way of example, to the accompanying drawings, wherein:
Figs. 1(A) and 1(B) are a plan view and a side view of a magnetic disk drive, respectively;
Fig. 2 is a graph showing exemplary transfer characteristics of an actuator;
Fig. 3 is a block diagram showing a previously-considered positioning control system;
Fig. 4 is a simplified graph showing exemplary transfer characteristics of a notch filter;
Fig. 5 is a graph showing the exemplary transfer characteristics of a notch filter group of the Fig. 3 system;

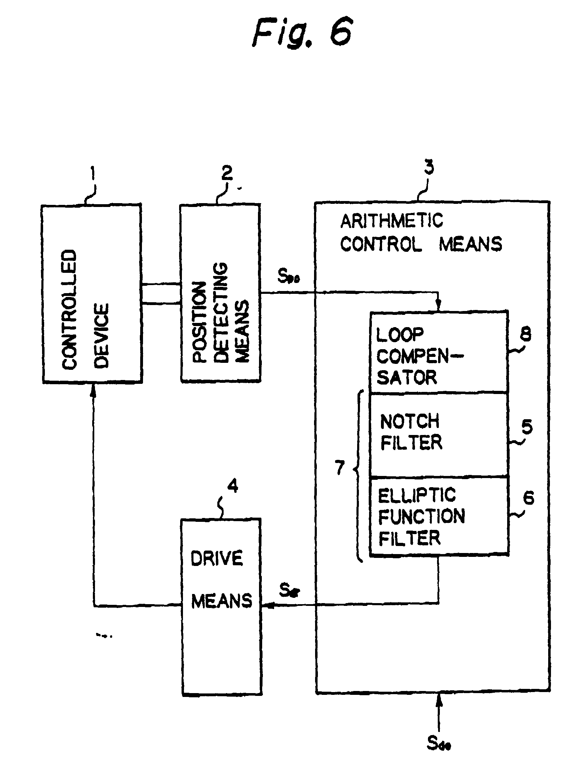

Fig. 6 is a block diagram showing an embodiment of the present invention;

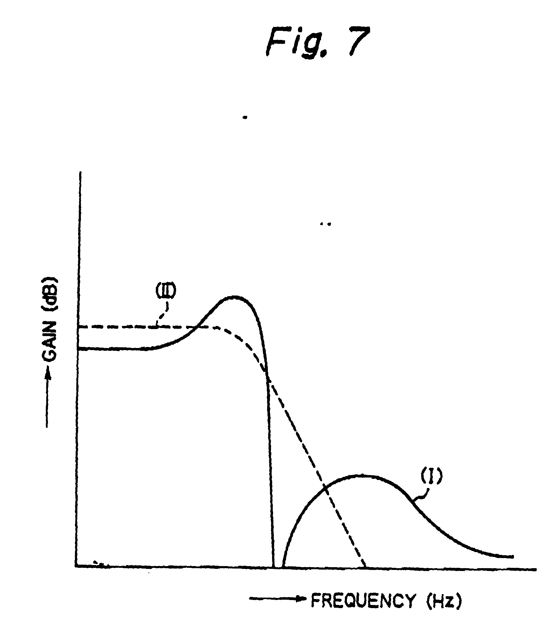

Fig. 7 is a simplified graph showing the transfer characteristics of an elliptical function filter of the Fig. 6 apparatus;

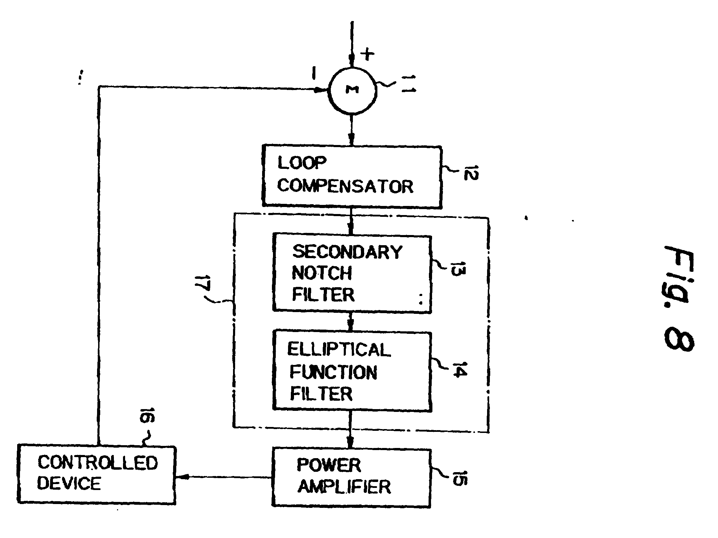

Fig. 8 is a block diagram showing a positioning control system embodying the present invention;

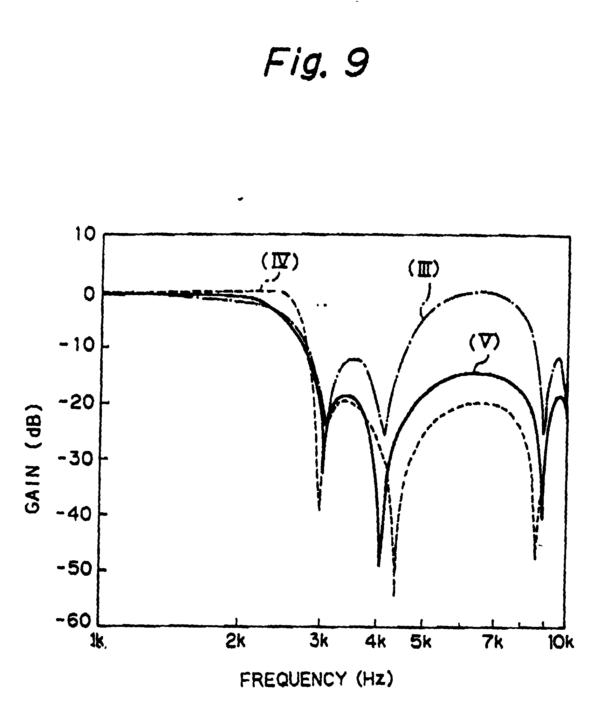

Fig. 9 is a graph showing a filter transfer function of Fig. 8 in terms of gain;

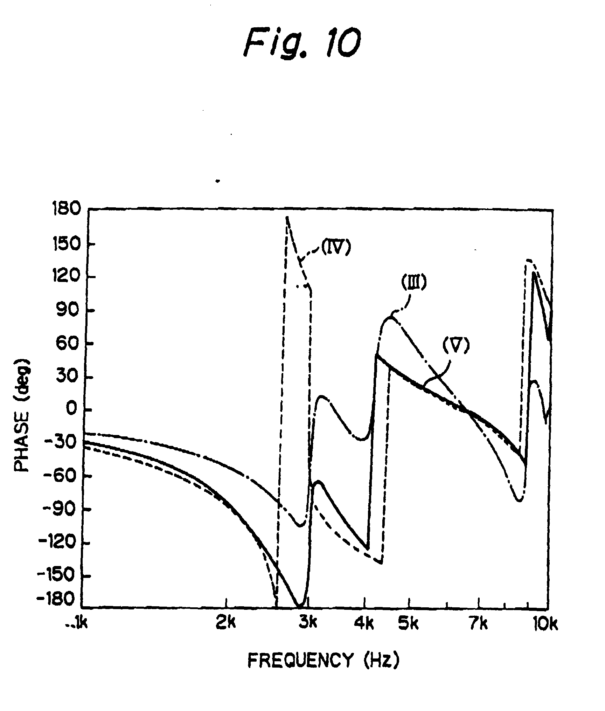

Fig. 10 is a graph showing a filter transfer function of Fig. 8 in terms of phase;

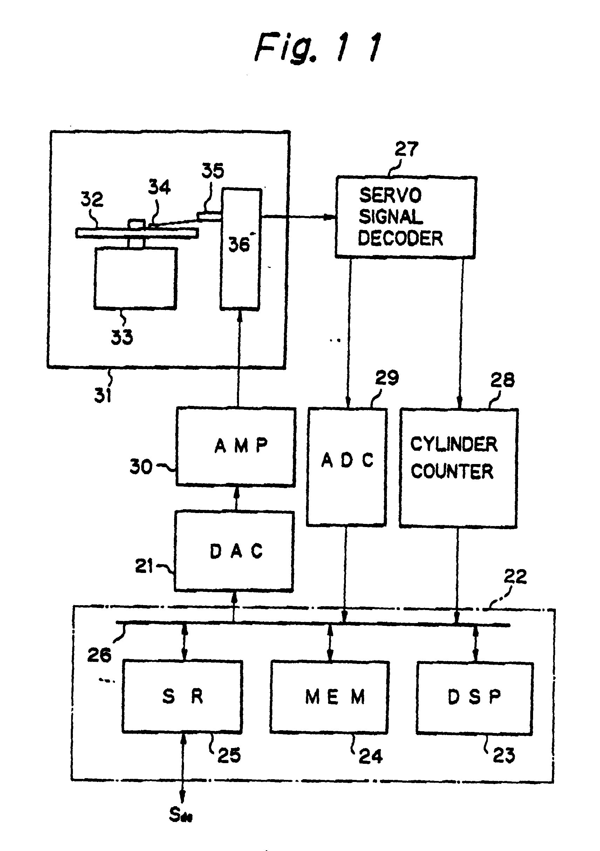

Fig. 11 is a block diagram showing an example in which the present invention is applied to a head positioning control system of a magnetic disk drive;

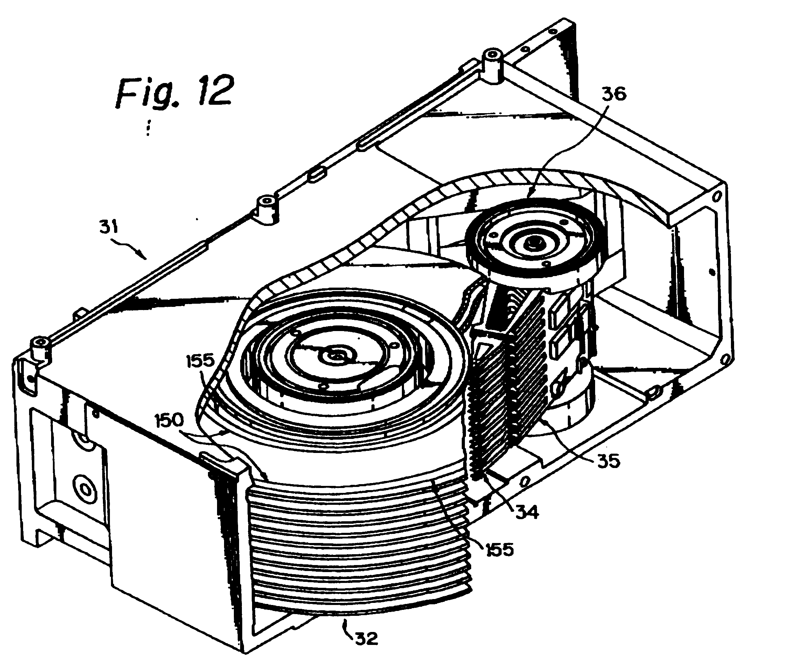

Fig. 12 is a perspective view, partially cut away, showing a mechanism of a magnetic disk drive;

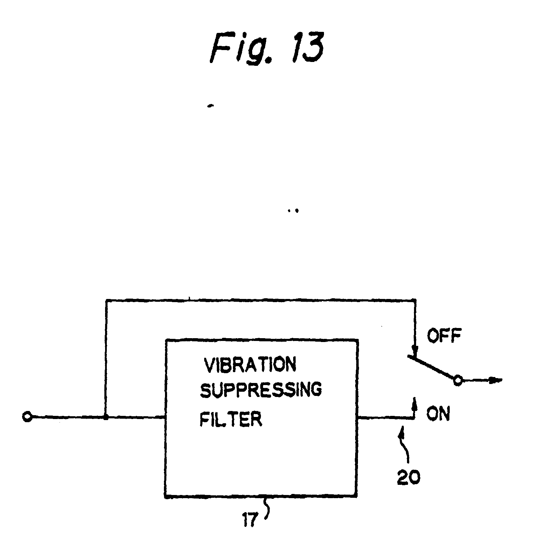

Fig. 13 is a simplified block diagram for explaining the condition where a vibration suppressing filter of Fig. 8 is turned on and off;

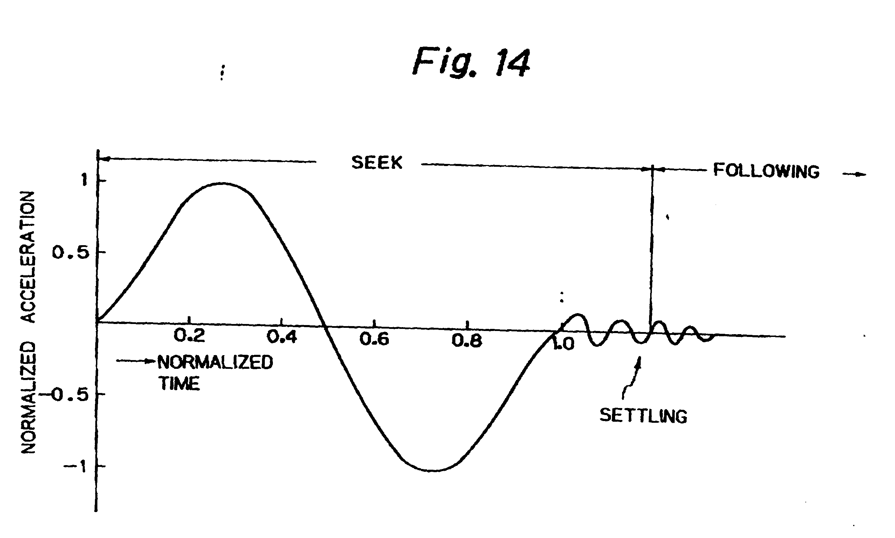

Fig. 14 is a simplified graph for explaining a role of a vibration suppressing filter of Fig. 13;

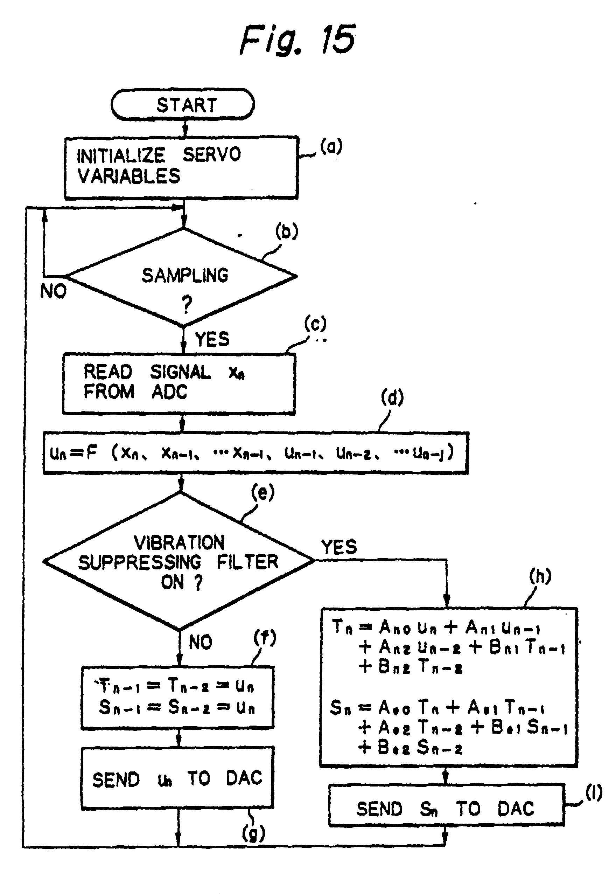

Fig. 15 is a flowchart for explaining an operation of a head positioning control system of Fig. 11; and

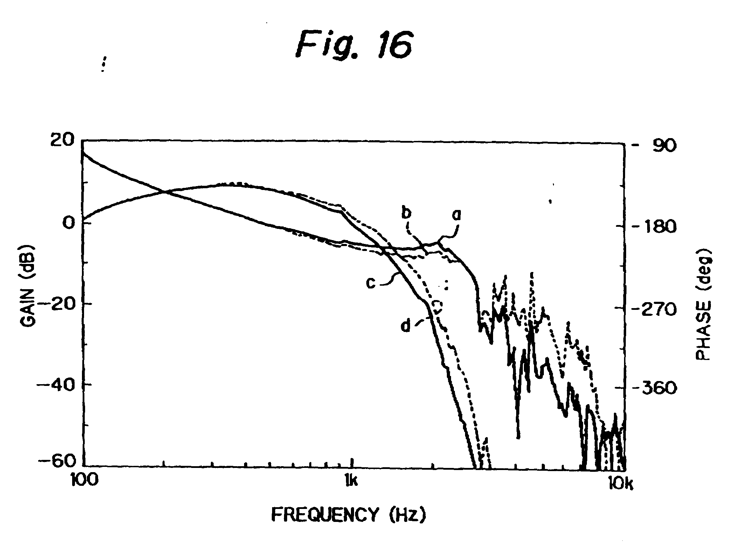

Fig. 16 is a graph showing open loop transfer characteristics illustrating improvements provided by embodiments of the present invention over the prior art.

In Fig. 6, a positioning control system which embodies the present invention and which is employed to control a controlled device 1 having a plurality of resonance frequencies, comprises position detecting means 2 for detecting a moved position of the controlled device 1; arithmetic control means 3 for generating a drive signal S_{dr} based on a position detection signal Sₚₒ from the position detecting means 2 and based on a designated position address (code) S_{de} input to the arithmetic control means 3 from a host device; and drive means 4 for moving the controlled device 1 in accordance with the drive signal S_{dr} from the arithmetic control means 3.

In this case, the arithmetic control means 3 include low pass filter means 7 which comprise a combination of a notch filter 5 and an elliptical function filter 6. The mechanical resonance characteristics of the controlled device 1 are suppressed by means of the low pass filter means 7.

Further, the low pass filter means 7 may be constructed so as to be turned on and off, and an initially set value to suppress the resonance characteristics by means of the low pass filter 7 is given when the low pass filter 7 is turned off, which will be described in detail hereinafter.

The arithmetic control means 3 shown in Fig. 6 include a loop compensator 8, and the low-pass filter means 7, which include a notch filter 5, and an elliptical function filter 6 for suppressing the mechanical resonance characteristics of a controlled device 1. For example, resonance of the device at the lowest mechanical resonance frequency can be suppressed by causing the centre frequency of the notch filter 5 to coincide therewith, and resonance at the second lowest mechanical resonance frequency can be eliminated by damping characteristics of the elliptical function filter 6 at frequencies higher than a predetermined cut-off frequency. In this case, it should be noted that the lowest mechanical resonance frequency is relatively stable and so the notch filter centre frequency can be accurately chosen to coincide with that resonance frequency. Higher mechanical resonance frequencies can by suppressed by the elliptical function filter 6 even if those resonance frequencies vary due to the variations in the controlled device (such as a magnetic disk drive) or due to change in temperature. The gain-frequency characteristics of the elliptical function filter are shown in Fig. 7 by a solid line (I) and those of a basic low-pass filter are indicated by a dotted line (II). Although the characteristics of the elliptical filter are such that the gain increases immediately before its cut-off frequency, such an increase can be suppressed by the notch filter 5. Thus, the mechanical resonance frequencies of the device can be suppressed by the use of a relatively simple filter construction.

As will be described in more detail below, during a high-speed control period (a seek operation) in which the controlled device is moved to a designated position, the low-pass filter means 7 may be turned off until control of the device reaches settling and positioning operations, when the low-pass filter means 7 are turned on. Since the input/output state of the low-pass filter means 7 is uncertain when the low-pass filter means 7 are off, the time required to stabilize a control loop may become long when the state of the low-pass filter means 7 are changed from off to on. In view of this, an initial drive signal value is maintained when the low-pass filter means 7 are off, as explained below, so as to avoid instability being caused in the control loop at high speed when the low-pass filter 7 is turned on.

Fig. 8 is a block diagram showing a positioning control system embodying the present invention including "adder circuit", a loop compensator 12, a secondary notch filter 13, an elliptical function filter 14, a power amplifier 15, a controlled device, and low-pass filter means 17 (also referred to as a vibration suppressing filter). A difference signal between a designated position address (e.g., track address) signal sent from a host device and a signal relating to the detected actual position of the controlled device 16 is obtained by the adder circuit 11. The controlled device 16 is controlled through the loop compensator 12, the low-pass filter means 17, and the power amplifier, to be positioned at the desired position.

The transfer function of the filter 17 is expressed in equation (10) below. A two stage notch filter 13 and an elliptical filter 14 have respective transfer functions Gn(s) and Fe(s) which are given in equations (11) and (12) respectively.$\text{Gne(s) = Gn(s)Ge(s)}$$\text{Gn(s) =} \frac{{\text{s}}^{\text{2}} {\text{+ 2ζ}}_{\text{n}} {\text{ω}}_{\text{n}} {\text{d}}_{\text{n}} {\text{s + ω}}_{\text{n}}^{\text{2}}}{{\text{s}}^{\text{2}} {\text{+ 2ζ}}_{\text{n}} {\text{ω}}_{\text{n}} {\text{s + ω}}_{\text{n}}^{\text{2}}}$${\text{Ge}}_{\text{(s)}} \text{=} \frac{{\text{d}}_{\text{e}} {\text{(s}}^{\text{2}} {\text{+ ω}}_{\text{ze}}^{\text{2}} \text{)}}{{\text{s}}^{\text{2}} {\text{+ 2ζ}}_{\text{e}} {\text{ω}}_{\text{e}} {\text{s + ω}}_{\text{e}}^{\text{2}}}$

Here, ω²ₑ = dₑ ω²_{ze} in order to make the value of direct current gain 1.0. Equation (12) shows the transfer function of a second order elliptical filter. Since it is complicated to calculate factors of the elliptical filter 14, the factors may be obtained from a table based on a low (pass) band ripple Rp, a damping Rs in a high (blocking) band, a cut-off frequency Fc, and the order N of the filter.

Figs. 9 and 10 show filter transfer functions in terms of gain and phase respectively. A dot-dash line curve (III), a dotted line cure (IV), and a solid line curve (V) respectively represent a two stage notch filter, a fourth order elliptical filter, and a two stage notch filter in combination with a second order elliptical filter. The transfer function of the two stage notch filter is expressed in equation (13). The transfer function of the fourth order elliptical filter is expressed in equation (14), and the transfer function of the two stage notch filter and the second order elliptical filter combination is expressed in equation (15).$\text{Gn(s) =} \frac{{\text{(s}}^{\text{2}} {\text{+ 2ζ}}_{\text{n1}} {\text{ω}}_{\text{n1}} {\text{d}}_{\text{n1}} {\text{s + ω}}_{\text{n1}}^{\text{2}} \text{)}}{{\text{(s}}^{\text{2}} {\text{+ 2ζ}}_{\text{n1}} {\text{ω}}_{\text{n1}} {\text{s + ω}}_{\text{n1}}^{\text{2}} \text{)}} \text{×} \frac{{\text{(s}}^{\text{2}} {\text{+ 2ζ}}_{\text{n2}} {\text{ω}}_{\text{n2}} {\text{d}}_{\text{n2}} {\text{s + ω}}_{\text{n2}}^{\text{2}} \text{)}}{{\text{(s}}^{\text{2}} {\text{+ 2ζ}}_{\text{n2}} {\text{ω}}_{\text{n2}} {\text{s + ω}}_{\text{n2}}^{\text{2}} \text{)}}$ where${\text{ω}}_{\text{n1}} {\text{= 2π × 3000, d}}_{\text{n1}} {\text{= 10}}^{\text{-(25/20)}} \text{(-25dB)}$${\text{ζ}}_{\text{n1}} \text{= 0.3}$${\text{ω}}_{\text{n2}} {\text{= 2π × 4100, d}}_{\text{n2}} {\text{= 10}}^{\text{-(25/20)}} \text{(-25dB)}$${\text{ζ}}_{\text{n2}} \text{= 0.7}$$\text{Ge(s) =} \frac{{\text{d}}_{\text{e1}} {\text{(s}}^{\text{2}} {\text{+ ω}}_{\text{ze1}}^{\text{2}} \text{)}}{{\text{(s}}^{\text{2}} {\text{+ 2ζ}}_{\text{e1}} {\text{ω}}_{\text{e1}} {\text{s + ω}}_{\text{e1}}^{\text{2}} \text{)}} \text{×} \frac{{\text{d}}_{\text{e2}} {\text{(s}}^{\text{2}} {\text{+ ω}}_{\text{ze2}}^{\text{2}} \text{)}}{{\text{(s}}^{\text{2}} {\text{+ 2ζ}}_{\text{e2}} {\text{ω}}_{\text{e2}} {\text{s + ω}}_{\text{e2}}^{\text{2}} \text{)}}$ where${\text{ω}}_{\text{c}} \text{= 2π × 2400, Rp = 0.1 dB, and Rs = 20 dB.}$$\text{Gne(s) =} \frac{{\text{(s}}^{\text{2}} {\text{+ 2ζ}}_{\text{n}} {\text{ω}}_{\text{n}} {\text{d}}_{\text{n}} {\text{s + ω}}_{\text{n}}^{\text{2}} \text{)}}{{\text{(s}}^{\text{2}} {\text{+ 2ζ}}_{\text{n}} {\text{ω}}_{\text{n}} {\text{s + ω}}_{\text{n}}^{\text{2}} \text{)}} \text{×} \frac{{\text{d}}_{\text{e}} {\text{(s}}^{\text{2}} {\text{+ω}}_{\text{ze}}^{\text{2}} \text{)}}{{\text{(s}}^{\text{2}} {\text{+ 2ζ}}_{\text{e}} {\text{ω}}_{\text{e}} {\text{s + ω}}_{\text{e}}^{\text{2}} \text{)}}$ where${\text{ω}}_{\text{n}} {\text{= 2π x 3000, d}}_{\text{ul}} {\text{= -25 dB, ζ}}_{\text{nl}} \text{= 0.3}$${\text{ω}}_{\text{c}} \text{= 2π x 2300, Rp = 1.0 dB, Rs = 15 dB}$

For equation (13), with the centre frequency of the first stage notch filter being 3 kHz, and that of the second stage notch filter being 4.1 kHz gain-frequency characteristics are represented by a dot-dash line curve (III) in Fig. 9 and phase-frequency characteristics are represented by a dot-dash line curve (III) in Fig. 10. For equation (14), with the cut-off frequency being 2.4 KHz, the low frequency band ripple Rp being 0.1 dB, and the damping Rs in the high frequency band being 20 dB, gain-frequency characteristics are represented by a dotted line curve (I) in Fig. 9 and phase-frequency characteristics are represented by a dotted line curve (IV) in Fig. 10. In other words, the characteristics are such that the gain is increased immediately before the cut-off frequency, and the phase delay becomes a large value, compared with the other two cases.

As opposed to this, the gain-frequency and phase-frequency for the filter combination governed by equation (15) are represented by a solid line curves (V) in Figs. 9 and 10 respectively. In this case, the notch centre frequency of the notch filter is set at 3 KHz, the cut-off frequency of the elliptical filter is set at 2.3 KHz, the low frequency band ripple is set at 1.0 dB, and the damping Rs in the high frequency band is set at 15 dB. Such a combination is used in an embodiment of the present invention. The notch filter is designed so that its' centre frequency is at the lowest mechanical resonance frequency of the device 1, and the elliptical function filter is designed so that it has a discontinuous pole, being a minimum-type discontinuity, at the second lowest mechanical resonance frequency of the device 1.

Various known means can be used to obtain the factors of the elliptical filter (e.g., A B Williams, "Electronic Filter Design Handbook", McGraw-Hill, New York, 1981). Further, the second order elliptical filter may consist of an operational amplifier, and an example thereof is described in the above reference. More conveniently, it is possible to use a commercially available program package "MATLAB" to aid design of the elliptical filter. Thus, the notch filter 13 and the elliptical function filter 14 can suppress the mechanical resonance characteristics of the controlled device 16 and can be relatively easily realized.

Fig. 11 is a block diagram showing an example in which an embodiment of the present invention is applied to a head positioning control system of a magnetic disk drive 31. In this case, the arithmetic control means 3 in Fig. 6 comprise a DSP (digital signal processor). In this figure, the reference numeral 21 denotes a digital-to-analogue converter (DAC), 22 an arithmetic controller, 23 a digital signal processor (DSP), 24 a memory (MEM), 25 a transfer register (SR), 26 a bus, 27 a servo signal decoder, 28 a cylinder counter, 29 an AD converter (ADC), and 30 an amplifier (AMP).

The magnetic disk drive 31 illustrated in Fig. 11 has a simplified construction and includes a single magnetic disk 32 which is rotated at a given speed by a spindle motor 33, and an actuator 36 which includes a voice coil motor or the like and which is controlled to move a head arm 35, having a magnetic head 34 mounted on a leading end thereof, so that the magnetic head 34 is positioned at a desired track position on the magnetic disk 32. The magnetic disk drive 31 may be constructed so as to have a number of magnetic disks and heads as shown in Figs. 1(A) and 1(B). A construction including the amplifier 30 and a part of the actuator 36 corresponds to the drive means 4 in Fig. 6, and a construction including the head 34, the head arm 35, and a part of the actuator 36 corresponds to the controlled device 1 in Fig. 6.

The servo signal decoder 27 decodes a servo signal read from the magnetic disk 32 through the head 34. The cylinder counter 28 counts the counter number (track number) by counting the zero-crossing points of the decoded servo signal, and indicates the current (actual) position of the head 34 from a reference point by means of the cylinder number (track number) . The moving distance of the head 34 (seek distance) corresponds to the number of tracks between the current (actual) track position and the desired track position. The AD converter 29 converts the decoded two-phase servo signal into a digital signal. A combination of the AD converter 29 and the cylinder counter 28 detects the current (actual) position of the head 34 from the reference point, and corresponds to the position detecting means 2 in Fig. 6. The DA converter 21 converts a drive control signal sent through the bus 26 from the digital signal processor 23 into an analog signal, which is amplified by the amplifier 30 to drive the actuator 16.

Here, in order to facilitate understanding of the construction of magnetic disk drive 31 in Fig. 11, a partially sectional plan view showing a perspective view, partially cut away, showing a mechanism of one magnetic disk drive is illustrated in Fig. 12.
Hereinafter, the same components as mentioned before will be referred to using the same reference numerals. As can be seen from Fig. 12, a plurality of magnetic disks (e.g., eleven magnetic disks) 32 are rotated simultaneously. The tracks on a recording surface of each disk 32 are written with a predetermined data pattern. However, the tracks at both ends of the inner zone and the outer zone of the disk 32 are formed as guard bands 150 in which a particular pattern is written, instead of a data pattern, the particular pattern being used for stopping a seek operation of a plurality of magnetic heads. Magnetic heads 34 and head arms 35 are provided on the upper and lower surfaces of the each of the disks 32. Further, at the inner and the outer sides of the guard band 150, an erase zone 155 is formed for mechanically stopping the heads 34.

Returning to Fig. 11, the arithmetic controller 22 corresponds to the arithmetic control means 3 in Fig. 6, and includes a digital signal processor 23, a memory 24, and a transfer register 25. In accordance with an address signal or the like sent from a host device, the digital signal processor 23 calculates the distance to be moved by the head 34 between the current (actual) position and a desired position, calculates the target trajectory corresponding to the calculated distance, and controls the actuator 36 so that the head 34 follows the calculated target trajectory. In this case, the digital signal processor 23 executes an operational processing which realizes the functions of the loop compensators 8, 12, the notch filters 5, 13 and the elliptical function filters 6, 14 as described above.

Here, it should be noted that the digital calculation of such a low-pass filter requires a relatively long time. However, without the low-pass filter, the residual vibration of the magnetic head after a seek operation of each magnetic head is completed continues for a relatively long time. Therefore, a long time is also required to perform write/read operation stably, even if the low pass filter is not used.

To address this disadvantage, it is preferable that the low-pass filter (vibration suppressing filter) 17 including the elliptical function filter is selectively turned on and off by switching means 20, as shown Fig. 13. To be more specific, during a seek operation (i.e. an operation to move the head from one track to another) of each magnetic head in Fig. 14, the low-pass filter means are turned off because the magnetic head moves at a higher acceleration and so the resonance characteristics become negligible. On the other hand, during subsequent settling and track-following operations, the magnetic head must be maintained at a desired track position with high accuracy and therefore the magnetic head moves at a lower acceleration and the resonance characteristics become significant. However, if the elliptical filter remains in an off state, residual vibration in the settling operation is likely to continue, as shown in Fig. 14. On the contrary, if the low-pass filter 17 is turned on during the settling and track-following operations, such residual vibration can be suppressed.

Fig. 15 is a flowchart for explaining an operation of a head positioning control system of Fig. 11. The operational processing in the arithmetic controller 22 which realizes the function of the low-pass filter including the notch filter and the elliptical filter is shown in Steps (a) to (i). More specifically, servo variables are initialized in Step (a), and it is decided whether or not a sampling time is on in Step (b). If the sampling time is on, a position detection signal xₙ is read by the AD converter (ADC) 29 in Step (c). Subsequently, a drive control signal uₙ is set as uₙ = F (xₙ, xₙ₋₁, ..., xₙᵢ, uₙ₋₁, uₙ₋₂, ... uₙ₋ⱼ) in Step (d). It is selected whether or not the vibration suppressing filter (low-pass filter means) including the notch and elliptical filters should be turned on in Step (e). This is because the vibration suppressing filter is preferably turned off during a seek operation so that the actuator 36 can be driven by a large amplitude current. Such selective use of the vibration suppressing filter is suited to applications in which operations are roughly divided into a track seek operation and a track-following operation, for example, in a magnetic disk drive. During such a seek operation, the vibration suppressing filter (low-pass filter) is turned off. The vibration suppressing filter (low-pass filter) is turned on, to give high speed, high accuracy positioning during a track-following operation.

The following equation (16) representing the characteristics of vibration suppressing filter (low-pass filter means) Tₙ at the first stage and corresponds to the discrete representation of the transfer function of the notch filter given in equation (11).${\text{T}}_{\text{n}} {\text{= A}}_{\text{n0}} {\text{u}}_{\text{n}} {\text{+ A}}_{\text{n1}} {\text{u}}_{\text{n-1}} {\text{+ A}}_{\text{n2}} {\text{u}}_{\text{n-2}} {\text{+ B}}_{\text{n1}} {\text{T}}_{\text{n-1}} {\text{+ B}}_{\text{n2}} {\text{T}}_{\text{n-2}}$$\text{Gn'(s) =} \frac{{\text{s}}^{\text{2}} {\text{+ 2ζ}}_{\text{n}} {\text{ω}}_{\text{n'}} {\text{d}}_{\text{n}} {\text{s + ω}}_{\text{n'}}^{\text{2}}}{{\text{s}}^{\text{2}} {\text{+ 2ζ}}_{\text{n}} {\text{ω}}_{\text{n'}} {\text{s + ω}}_{\text{n'}}^{\text{2}}}$$\text{s =} \frac{\text{2}}{{\text{T}}_{\text{s}}} \text{×} \frac{{\text{1 - Z}}^{\text{-1}}}{{\text{1 + Z}}^{\text{-1}}}$${\text{A}}_{\text{n0}} \text{=} \frac{{\text{t}}^{\text{2}} {\text{+ 2ζ}}_{\text{n}} {\text{d}}_{\text{n}} \text{t + 1}}{{\text{t}}^{\text{2}} {\text{+ 2ζ}}_{\text{n}} \text{t + 1}}$${\text{A}}_{\text{n1}} \text{=} \frac{{\text{2(t}}^{\text{2}} \text{- 1)}}{{\text{t}}^{\text{2}} {\text{+ 2ζ}}_{\text{n}} \text{t + 1}}$${\text{A}}_{\text{2}} \text{=} \frac{{\text{t}}^{\text{2}} {\text{- 2ζ}}_{\text{n}} {\text{d}}_{\text{n}} \text{t + 1}}{{\text{t}}^{\text{2}} {\text{+ 2ζ}}_{\text{n}} \text{t + 1}}$${\text{B}}_{\text{n1}} {\text{= -A}}_{\text{n1}}$${\text{B}}_{\text{n2}} \text{= -} \frac{{\text{t}}^{\text{2}} {\text{- 2ζ}}_{\text{n}} {\text{d}}_{\text{n}} \text{t + 1}}{{\text{t}}^{\text{2}} {\text{+ 2ζ}}_{\text{n}} \text{t + 1}}$ where,$\text{t = tan(} \frac{{\text{ω}}_{\text{n}} {\text{T}}_{\text{s}}}{\text{2}} \text{)}$

Here, Ts is a sampling period. Usually, after an S-Z transformation in a bilinear form, the notch angular centre frequency ωₙ is likely to be shifted. To compensate for this frequency shift, the notch angular frequency ωₙ' is pre-adjusted (prewarped) to ω'_{n'} where ωₙ' = (2/Ts) tan (Δₙ Ts/2), and the equation (17) in which the notch angular frequency ωₙ is replaced with ωₙ' is bilinearly transformed (also referred to as Tustin transformation) with the equation (17'), whereby the equation (16) is obtained. Aₙ₀; Aₙ₁; Aₙ₂; Bₙ₁; and Bₙ₂ are as shown in the equations (17a) to (17e).

Similarly, the following equation (18) representing the characteristics of the vibration suppressing filter Sₙ (low-pass filter means) at the second stage can be obtained, if the angular frequency ω_{ze} at a zero point in the equation (12) representing a transfer function of the secondary elliptical function filter is prewarped into ω_{ze}', where ω_{ze}' = (1/Ts) tan (ω_{ze}Ts/2), and the equation (12) having ω_{ze}' is bilinearly transformed.

Aₑ₀, Aₑ₁, Aₑ₂, Bₑ₁, and Bₑ₂ are as shown in the equations (19a) to 19(e).

The operational processing an mentioned above is carried out in Step (h), and the calculation result in accordance with the equation (18) is output to the DA converter (DAC) 21 in Step (i). The analog signal obtained through the DA converter 21 is amplified by the amplifier 30, and applied to the actuator 36 thereby to suppress the mechanical resonance characteristics of the head arm 35.

When the vibration suppressing filters (low-pass filters) are rendered ineffective, no filter calculation is performed (as shown by Tₙ₋₁ = Tₙ₋₂ = uₙ and Sₙ₋₁ = Sₙ₋₂ = uₙ in Step (f)). In this way, an output uₙ in Step (d) is applied to the AD converter 21. The converted analog signal is amplified by the amplifier 30 to drive the actuator 36. In this case, the initial value is continuously supplied so as to avoid a transient response being produced when the vibration suppressing filters (low-pass filter) are turned on.

Fig. 16 is a graph showing open loop transfer characteristics. In this graph, solid line curves (a), (c) respectively represent gain-frequency and phase-frequency characteristics of an embodiment of the present invention. Dotted line curves (b), (d) respectively represent gain-frequency and phase-frequency characteristics of a previously-considered system. It can be seen from this graph that the mechanical resonance characteristic can be sufficiently suppressed by low-pass filter means comprising a combination of a notch filter and an elliptic filter.

Although the vibration suppressing filters (low-pass filters) are realized by a digital calculating function in the foregoing embodiment, they may be realized by an analog circuit including an operational amplifier and the like. Further, embodiments of the invention may not only be used in magnetic disk drives, but also in magneto-optical disk drives, optical disk drives, printers, or similar devices which include a controlled device such as at least one head that has various mechanical resonance modes and that is required to be controlled and positioned with high accuracy.

Unlike previously-considered systems, a control system embodying the present invention does not use a plurality of notch filters, and thus tends to have more economical construction. In the case of digital signal processing, the response characteristics can be improved over previously-considered systems since operational processing time is shortened. In the case where the low-pass filter means are realized by an analog circuit, such a control system can be advantageously made small in size. Such a control system is further advantageous in that the mechanical resonance characteristics can be sufficiently suppressed by the elliptical filter even if there are variations and aging in the mechanical resonance characteristics.

In the case where a control system is constructed such that the low-pass filter means are turned on and off, operation of the low-pass filter means is stopped when a drive current varies with a large amplitude such as during a seek operation. This allows the operational processing to be omitted in the case of the digital processing, thereby improving the response characteristics. As in the case where the operation proceeds from the seek operation to a following operation, the low-pass filter is turned on to suppress the resonance characteristics. Accordingly, the controlled device can be positioned with high accuracy, and an initial value is given when the low-pass filter is turned off. Thus, the control system is advantageous in being able to execute a stable control when the state of the low-pass filter is changed from off to on.

Whilst the present invention has been exemplified above with reference to magnetic disk drive systems, it will be appreciated that its applications are not limited thereto. For example, embodiments of the present invention may find applications in optical disk drive systems and in printer systems.

## Claims

1. A positioning control system including a movable device and means for controlling the position of the device in dependence upon an applied position-designating signal, the said device having a plurality of mechanical resonance frequencies, which system comprises:
position detecting means (2) for producing an actual position signal dependent upon the actual position of the said device (1);
arithmetic control means (3), including electronic low-pass filter means operable to suppress effects of mechanical resonances of the device, for generating a drive signal based on the said actual position signal and on the applied position-designating signal; and
drive means (4) for moving the said device (1) in dependence upon the said drive signal,
characterised in that the said filter means comprise a notch filter (5), having a gain-frequency characteristic which provides an abrupt low-pass cut-off slope and has its notch centre frequency at the lowest mechanical resonance frequency of the device (1), and an elliptical filter (6) having a gain-frequency characteristic which has a minimum-type discontinuity at the second lowest mechanical resonance frequency of the device (1).

2. A positioning control system as claimed in claim 1, wherein a digital signal processor provides the said notch and elliptical filters (5, 6).

3. A positioning control system as claimed in claim 1 or 2, wherein the said device (1) includes an operating head (34) for cooperating with a data storage disk having a plurality of data tracks, the system including switching means for rendering the said filter means ineffective when the said operating head is moved from one of such tracks to another, in a seek operation, and for rendering the said filter means effective during settling and track-following operations subsequent to such a seek operation.

4. A positioning control system as claimed in claim 3, operable to maintain the said drive signal at an initial value while the said filter means are ineffective.

5. A positioning control system as claimed in claim 3 or 4, wherein the said operating head is a magnetic head, for cooperating with such a data storage disk being a magnetic data storage disk.

6. A positioning control system as claimed in claim 5, in combination with such a magnetic data storage disk.

7. A positioning control system as claimed in claim 5 or 6, wherein a spindle motor is arranged for rotating the said magnetic data storage disk.

8. A positioning control system as claimed in claim 3 or 4, wherein the said operating head is an optical head, for cooperating with such a data storage disk being an optical data storage disk.

9. A positioning control system as claimed in claim 8, in combination with such an optical data storage disk.

10. A positioning control system as claimed in claim 1 or 2, wherein the said device (1) comprises a print head which is movable over a printing sheet.

11. A positioning control system as claimed in one of claims 3 to 10, wherein the said arithmetic control means further include a digital signal processor (23) operable to calculate the distance between the actual position of the said head (34) and a designated desired position of the head, so that the said device (1) is controlled to move through the calculated distance when the system is in use.

12. A positioning control system as claimed in one of claims 3 to 11, wherein the said drive means include an amplifier (30) for amplifying the said drive signal.

## Patentansprüche

1. Ein Positionier-Steuersystem, das eine bewegbare Vorrichtung und Mittel zum Steuern der Position der Vorrichtung in Abhängigkeit von einem angelegten Positionsbezeichnungssignal enthält, welche Vorrichtung eine Vielzahl mechanischer Resonanzfrequenzen aufweist, welches System umfaßt:
Position-Detektiermittel (2) zum Erzeugen eines Tatsächliche-Position-Signals, das von der tatsächlichen Position der Vorrichtung (1) abhängt;
arithmetische Steuermittel (3), die elektronische Tiefpaßfiltermittel enthalten, die betreibbar sind, um Effekte mechanischer Resonanzen der Vorrichtung zu unterdrücken, zum Erzeugen eines Antriebssignals, das auf dem Tatsächliche-Position-Signal und auf dem angelegten Positionsbezeichnungssignal basiert; und
Antriebsmittel (4) zum Bewegen der Vorrichtung (1) in Abhängigkeit von dem Antriebssignal,
dadurch gekennzeichnet, daß die Filtermittel ein Kerbenfilter (5) mit einer Verstärkung-Frequenz-Charakteristik aufweisen, die eine abrupte Tiefpaß-Grenzsteilheit liefert und ihre Kerbenmittenfrequenz bei der niedrigsten mechanischen Resonanzfrequenz der Vorrichtung (1) aufweist, und ein elliptisches Filter (6) mit einer Verstärkung-Frequenz-Charakteristik, die eine Diskontinuität vom Minimaltyp bei der zweitniedrigsten mechanischen Resonanzfrequenz der Vorrichtung (1) aufweist.

2. Ein Positionier-Steuersystem nach Anspruch 1, worin ein Digitalsignalprozessor die Kerben- und elliptischen Filter (5, 6) bereitstellt.

3. Ein Positionier-Steuersystem nach Anspruch 1 oder 2, worin die Vorrichtung (1) einen Operationskopf (34) zum Zusammenarbeiten mit einer Datenspeicherplatte mit einer Vielzahl von Datenspuren enthält, wobei das System Schaltmittel enthält, um die Filtermittel unwirksam zu machen, wenn der Operationskopf von einer solcher Spuren zu einer anderen in einer Suchoperation bewegt wird, und um die Filtermittel während Abkling- und Spurfolgeoperationen nach solch einer Suchoperation wirksam zu machen.

4. Ein Positionier-Steuersystem nach Anspruch 3, das betreibbar ist, um das Antriebssignal bei einem Anfangswert zu halten, während die Filtermittel unwirksam sind.

5. Ein Positionier-Steuersystem nach Anspruch 3 oder 4, worin der Operationskopf ein Magnetkopf zum Zusammenarbeiten mit solch einer Datenspeicherplatte ist, die eine magnetische Datenspeicherplatte ist.

6. Ein Positionier-Steuersystem nach Anspruch 5, in Kombination mit solch einer magnetischen Datenspeicherplatte.

7. Ein Positionier-Steuersystem nach Anspruch 5 oder 6, worin ein Spindelmotor zum Drehen der magnetischen Datenspeicherplatte angeordnet ist.

8. Ein Positionier-Steuersystem nach Anspruch 3 oder 4, worin der Operationskopf ein optischer Kopf zum Zusammenarbeiten mit solch einer Datenspeicherplatte ist, die eine optische Datenspeicherplatte ist.

9. Ein Positionier-Steuersystem nach Anspruch 8, in Kombination mit solch einer optischen Datenspeicherplatte.

10. Ein Positionier-Steuersystem nach Anspruch 1 oder 2, worin die Vorrichtung (1) einen Druckkopf aufweist, der über einem Druckblatt bewegbar ist.

11. Ein Positionier-Steuersystem nach einem der Ansprüche 3 bis 10, worin die arithmetischen Steuermittel ferner einen Digitalsignalprozessor (23) enthalten, der betreibbar ist, um den Abstand zwischen der tatsächlichen Position des Kopfes (34) und einer bezeichneten gewünschten Position des Kopfes zu berechnen, so daß die Vorrichtung (1) gesteuert wird, um sich über den berechneten Abstand zu bewegen, wenn das System in Gebrauch ist.

12. Ein Positionier-Steuersystem nach einem der Ansprüche 3 bis 11, worin die Antriebsmittel einen Verstärker (30) zum Verstärken des Antriebssignals enthalten.

## Revendications

1. Système de commande de positionnement comprenant un dispositif mobile et un moyen pour commander la position du dispositif en fonction d'un signal de désignation de position appliquée, ledit dispositif ayant une pluralité de fréquences de résonances mécaniques, lequel système comprend :
un moyen de détection de position (2) pour produire un signal de position réelle dépendant de la position réelle dudit dispositif (1) ;
un moyen de commande arithmétique (3), comprenant un moyen de filtre passe bas électronique utilisable pour supprimer des effets des résonances mécaniques du dispositif, pour générer un signal de commande sur la base dudit signal de position réelle et sur la base du signal de désignation de position appliqué ; et
un moyen d'entraînement (4) pour déplacer ledit dispositif (1) en fonction dudit signal d'entraînement,
caractérisé en ce que ledit moyen de filtre comprend un filtre coupe bande à bande étroite (5), ayant une caractéristique de gain - fréquence qui fournit une pente de coupure passe bas raide et a sa fréquence centrale de bande étroite à la fréquence de résonance mécanique la plus petite du dispositif (1), et un filtre elliptique (6) ayant une caractéristique de gain - fréquence qui a une discontinuité du type minimum sur la seconde fréquence de résonance mécanique la plus petite du dispositif (1).

2. Système de commande de positionnement selon la revendication 1, dans lequel un processeur de signal numérique fournit lesdits filtres coupe bande à bande étroite et elliptique (5, 6).

3. Système de commande de positionnement selon la revendication 1 ou 2, dans lequel ledit dispositif (1) comprend une tête de fonctionnement (34) destinée à coopérer avec un disque de stockage de données ayant une pluralité de pistes de données, le système comprenant un moyen de commutation pour rendre ledit moyen de filtre inefficace lorsque ladite tête de fonctionnement est déplacée d'une de ces pistes à une autre, dans une opération de recherche, et pour rendre ledit moyen de filtre efficace pendant des opérations d'établissement et de suivi de piste qui suivent une telle opération de recherche.

4. Système de commande de positionnement selon la revendication 3, utilisable pour maintenir ledit signal d'entraînement à une valeur initiale alors que lesdits moyens de filtre sont inefficaces.

5. Système de commande de positionnement selon la revendication 3 ou 4, dans lequel ladite tête de fonctionnement est une tête magnétique, destinée à coopérer avec un tel disque de stockage de données qui est un disque de stockage de données magnétique.

6. Système de commande de positionnement selon la revendication 5, en association avec un tel disque de stockage de données magnétique.

7. Système de commande de positionnement selon la revendication 5 ou 6, dans lequel un moteur d'axe est disposé pour mettre en rotation ledit disque de stockage de données magnétique.

8. Système de commande de positionnement selon la revendication 3 ou 4, dans lequel ladite tête de fonctionnement est une tête optique, destinée à coopérer avec un tel disque de stockage de données qui est un disque de stockage de données optique.

9. Système de commande de positionnement selon la revendication 8, en association avec un tel disque de stockage de données magnétique.

10. Système de commande de positionnement selon la revendication 1 ou 2, dans lequel ledit dispositif (1) comprend une tête d'impression qui est mobile sur une feuille d'impression.

11. Système de commande de positionnement selon l'une quelconque des revendications 3 à 10, dans lequel ledit moyen de commande arithmétique comprend en outre un processeur de signal numérique (23) utilisable pour calculer la distance entre la position réelle de ladite tête (34) et une position désirée désignée de la tête, afin que ledit dispositif (1) soit commandé pour être déplacer de la distance calculée lorsque le système est utilisé.

12. Système de commande de positionnement selon l'une quelconque des revendications 3 à 11, dans lequel ledit moyen d'entraînement comprend un amplificateur (30) pour amplifier ledit signal d'entraînement.
